Europäisches Patentamt

European Patent Office

Office européen des brevets

(19)

(11) **EP 0 719 738 B1**

(12) **FASCICULE DE BREVET EUROPEEN**

(45) Date de publication et mention
de la délivrance du brevet:
**25.04.2001 Bulletin 2001/17**

(51) Int Cl.⁷: **C03B 37/012**

(21) Numéro de dépôt: **95402950.0**

(22) Date de dépôt: **27.12.1995**

(54) **Procédé d'obtention de préforme de fibre optique employant la recharge plasma**

Verfahren zur Herstellung von Lichtleitfaservorformen mittels Plasmaabscheidung

Process for making optical fibre preform employing plasma deposition

(84) Etats contractants désignés:
**DE DK GB IT NL**

(30) Priorité: **29.12.1994 FR 9415867**

(43) Date de publication de la demande:
**03.07.1996 Bulletin 1996/27**

(73) Titulaire: **ALCATEL**
**75008 Paris (FR)**

(72) Inventeurs:
• **Gouez, Benoit**
  **F-75002 Paris (FR)**
• **Ripoche, Pierre**
  **F-45300 Pithiviers (FR)**

(74) Mandataire: **Feray, Valérie et al**
**COMPAGNIE FINANCIERE ALCATEL**
**Dépt. Propriété Industrielle,**
**30, avenue Kléber**
**75116 Paris (FR)**

(56) Documents cités:
**EP-A- 0 153 762**        **EP-A- 0 360 479**
**EP-A- 0 440 130**        **EP-A- 0 450 465**
**EP-A- 0 484 035**        **US-A- 4 294 601**

• **PATENT ABSTRACTS OF JAPAN vol. 18, no. 322 (C-1214), 20 Juin 1994 & JP-A-06 072735 (FURUKAWA ELEC CO LTD), 15 Mars 1994,**
• **PATENT ABSTRACTS OF JAPAN vol. 16, no. 98 (C-0918), 11 Mars 1992 & JP-A-03 279234 (SHIN ETSU CHEM CO LTD), 10 Décembre 1991,**
• **PATENT ABSTRACTS OF JAPAN vol. 11, no. 307 (C-450), 7 Octobre 1987 & JP-A-62 096336 (NIPPON TELEGR & TELEPH CORP), 2 Mai 1987,**
• **DATABASE WPI Section Ch, Week 8519 Derwent Publications Ltd., London, GB; Class L01, AN 85-113440 XP002000657 & JP-A-60 054 934 ( HITACHI CABLE KK) , 29 Mars 1985**

**Description**

La présente invention concerne un procédé d'obtention de préforme de fibre optique employant la recharge plasma. Elle recouvre également la préforme issue de ce procédé et la fibre optique tirée de cette préforme.

La fabrication de fibres optiques à partir de préformes est classique. L'obtention d'une préforme par la technique de la recharge plasma est connue; elle est décrite, par exemple, dans le document de brevet EP-A1-450 465.

Les caractéristiques optogéométriques d'une fibre déterminent des caractéristiques de transmission. Elles incluent la géométrie de la fibre, notamment les surfaces des différentes parties concentriques de la fibre, en coupe transversale, et les caractéristiques optiques de ces différentes parties. Ces caractéristiques optogéométriques sont issues de celles de la préforme dont est tirée la fibre, en tenant compte de l'effet du fibrage.

La fibre idéale aurait des caractéristiques optogéométriques nominales et constantes sur toute sa longueur. Elle serait issue d'une préforme parfaitement cylindrique et de caractéristiques optogéométriques constantes sur toute sa longueur utile.

Toutefois dans la pratique, différents effets difficiles à corriger complètement, empêche d'atteindre cet idéal. C'est ainsi que le document de brevet EP-A1-440 130 mentionne, à côté du défaut de concentricité, dont il ne sera pas davantage question ici, des irrégularités de diamètre. Celles-ci sont corrigées par un usinage de la préforme terminée, qui demande une ou plusieurs phases de correction, ce qui se traduit par un surcoût et une perte de rendement de production. De plus, le procédé de correction dont il est question vise des préformes obtenues directement par le procédé connu sous le nom de MCVD (Modified Chemical Vapor Deposition), et non pas les préformes obtenues par recharge plasma.

La présente invention a donc pour objet un procédé d'obtention de préforme de fibre optique employant la recharge plasma fournissant une préforme aux propriétés optogéométriques améliorées.

Selon l'invention, cet objet est atteint en ce que l'une au moins des passes de recharge plasma est modulée en vue d'améliorer les propriétés optogéométriques de la préforme.

L'invention est donc basée sur le principe consistant à modifier les propriétés optogéométriques de la préforme par action sur le processus de recharge plasma, ce qui ne demande aucune étape ou phase additionnelle de correction.

Ladite passe de recharge modulée est de préférence l'une des dernières phases de recharge pour lesquelles, le processus de recharge étant non modulé, l'épaisseur de la couche de recharge déposée serait sensiblement constante le long de la partie utile de la préforme.

En effet, on a constaté que l'une des causes de variation axiale des propriétés optogéométriques des préformes obtenues selon les procédés de recharge plasma connus résidait non seulement dans la préforme primaire à recharger, réalisée par tout procédé connu (MCVD, VAD, OVPD...), mais aussi dans le procédé de recharge plasma lui-même et spécialement dans les premières passes de recharge plasma. Ensuite, toujours dans le procédé connu, l'épaisseur des couches de recharge plasma devient finalement constante. L'invention prévoit donc d'agir à ce moment sur le processus de recharge plasma de façon à corriger toutes les déviations des propriétés optogéométriques de la préforme.

Plus particulièrement, le processus de recharge peut être modulé à partir d'un diamètre prédéterminé de la préforme.

De préférence, le processus de recharge modulé consiste en une modification axiale contrôlée de l'un au moins des paramètres de la recharge plasma, dont notamment le débit de grains de recharge, la température du plasma ou la vitesse de translation axiale du plasma le long de la préforme. De préférence, il s'agit du débit de grains de recharge.

Par ailleurs, ladite modification axiale contrôlée peut comprendre une évaluation d'écarts axiaux de diamètre de la préforme et une modification axiale dudit paramètre dans un sens tel que ladite passe de recharge modulée réduise lesdits écarts axiaux de diamètre. En d'autres termes, en fonction d'écarts axiaux de diamètre préalablement déterminés, la passe de recharge est modulée et ajoute - ou retranche - au diamètre de la préforme de façon à ce que lesdits écarts soient plus faibles - voire annulés - après la passe de recharge.

Plus précisément, on peut par exemple opérer soit :

- une réduction du débit de grains proportionnelle audit écart, pour déposer une couche d'autant plus mince que le diamètre est excessif,
- une réduction déterminée du débit de grains pour déposer une couche d'épaisseur réduite là où le diamètre est trop élevé et le réduire d'une valeur déterminée,
- ou arrêter complètement le débit de grains, ce qui entraîne une ablation localisée de la préforme par évaporation sous l'effet du plasma.

De préférence, ladite évaluation d'écarts axiaux s'effectue par mesure axiale de diamètre au cours d'une passe de mesure, laquelle peut avantageusement coïncider avec une passe de recharge, lesdits écarts axiaux étant déterminés par comparaison entre les résultats de ladite mesure et un profil de référence.

Dans un premier mode de mise en oeuvre ledit profil de référence comprend le diamètre axial minimal observé au cours de ladite passe de mesure. Cela correspond aux écarts par rapport à une forme cylindrique. Mais, dans une deuxième forme de mise en oeuvre, ledit profil de référence comprend aussi un terme de correction axiale du diamètre dérivé de mesures effectuées sur la préforme antérieurement à la recharge plasma. Cela permet de prendre en compte et de corriger des anomalies des caractéristiques optogéométriques de la préforme ayant leur origine dans les phases antérieures à la recharge plasma, telles qu'une conicité ou un amincissement central du coeur de la préforme par rapport à son diamètre extérieur.

La présente invention sera mieux comprise grâce à la description donnée ci-après, à titre d'exemple non limitatif, d'un mode de mise en oeuvre, en se référant aux figures annexées qui représentent :

- la figure 1, le plan général d'un équipement de recharge plasma dans lequel peut être mise en oeuvre l'invention,
- la figure 2, un organigramme décrivant un processus de recharge plasma dans lequel on trouve un exemple de mise en oeuvre de l'invention.
- la figure 3, une succession de courbes de diamètre le long de la préforme illustrant l'effet de l'invention.
- la figure 4, une courbe illustrant l'application de l'organigramme de la figure 2.

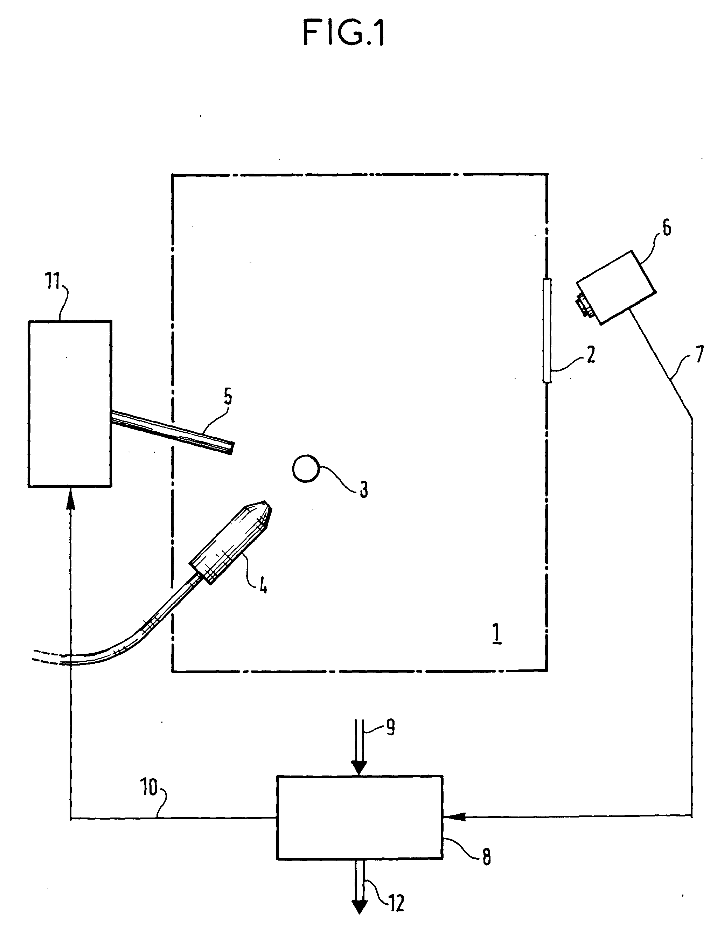

Le plan de la figure 1 représente de façon très générale, un équipement de recharge plasma dans lequel peut être mise en oeuvre l'invention.

Cet équipement comprend, dans une enceinte 1, pourvue d'une fenêtre transparente 2, une préforme 3, vue de bout, vers laquelle sont dirigées une torche à plasma 4 et une buse d'alimentation en grains de recharge 5. A l'extérieur de l'enceinte, une caméra CCD 6, disposée derrière la fenêtre 2, est pointée sur la préforme 3. Elle fournit une mesure du diamètre de la préforme, à l'endroit où elle est pointée, sous la forme d'une valeur transmise par une liaison 7 à un dispositif de commande de processus de recharge 8. Ce dernier reçoit, par une liaison multiple 9, d'autres indications sur des conditions d'exécution du processus de recharge. Sous l'effet d'un programme interne de conduite de processus de recharge, le dispositif 8 fournit, sur une liaison de sortie 10, une valeur de commande de débit de grains à un doseur de débit de grains 11 qui alimente en conséquence la buse 5. Le dispositif 8 fournit aussi, sur une liaison multiple de sortie 12, d'autres valeurs de commande déterminant d'autres aspects de l'exécution du processus de commande.

Tous les éléments de l'équipement illustré par la figure 1 sont bien connus dans la technique. D'autres, qui ne sont pas figurés, sont également bien connus. C'est ainsi que les moyens de support de la préforme 3, avec entraînement en rotation et en translation, un chariot de support de la torche à plasma 4 et de la buse 5, avec entraînement en translation parallèlement à l'axe longitudinal de la préforme 3, des moyens d'évaluation de la position angulaire de la préforme et de la position longitudinale du chariot sont décrits dans le document EP-A1-440 130 déjà mentionné. Des moyens permettant de pointer la caméra 6 en des endroits successifs de la préforme 3 dans une passe de mesure qui pourraient prendre la forme, d'un second chariot au déplacement couplé avec celui du premier chariot mentionné, appartiennent également à la technique connus. Le doseur de débit de grains sera par exemple un doseur pondéral à jauge de contrainte avec vis sans fin, ou auge vibrante.

La recharge plasma s'opére par passes, de droite à gauche, puis de gauche à droite, au cours desquelles la torche à plasma 4 et la buse 5 balaient la longueur de la préforme.

Simultanément, la caméra 6 accomplit une passe de mesure, fournissant des valeurs successives du diamètre de la préforme 3 sur toute sa longueur. De préférence, pour simplifier, la caméra n'effectue la mesure qu'une passe sur deux, par exemple de droite à gauche, tandis que durant la passe suivante, la sortie de la caméra n'est pas validée. Les valeurs de mesure nécessaires sont alors obtenues par extrapolation, comme on le verra par la suite.

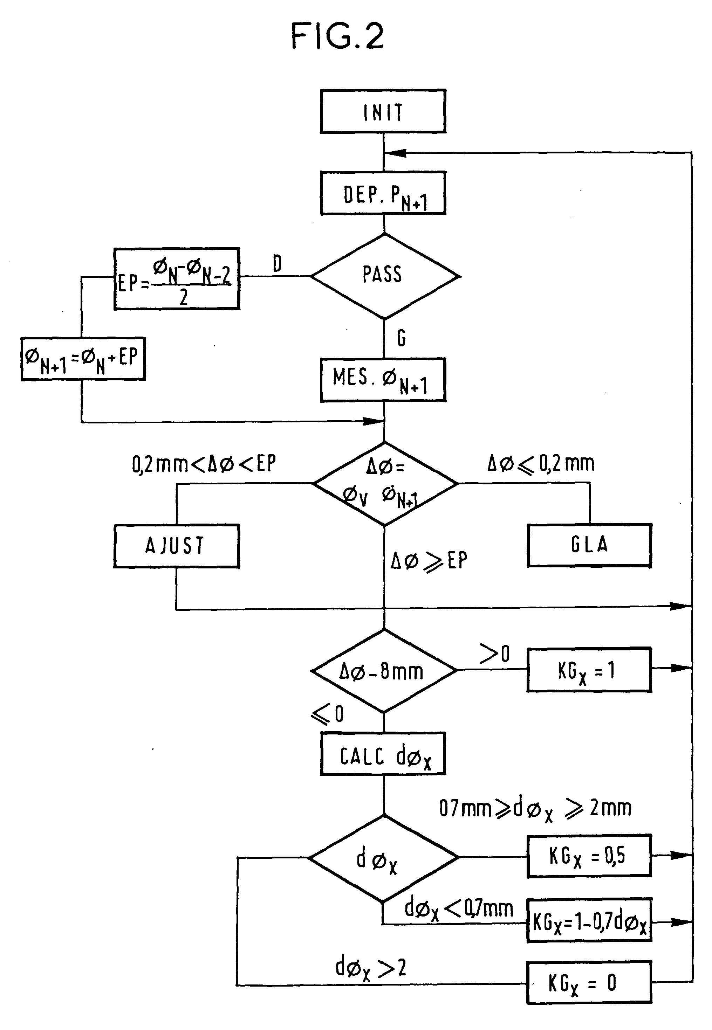

On se reportera maintenant à la figure 2 pour décrire un mode de mise en oeuvre du procédé d'obtention de préforme de l'invention. Cet organigramme représente les étapes essentielles du processus de recharge.

Ce processus de recharge débute par une étape d'initialisation, notée INIT, dans laquelle sont fixés les différents paramètres de la recharge et dans laquelle le dispositif de commande de processus attend que soient atteintes certaines conditions d'exécution du processus, une température définie de l'enceinte 1 ou de la préforme 3, par exemple.

Lorsque les conditions sont réunies, le processus de recharge commence par une première passe, alors que N = 0, soit une passe $P_1$.

Le numéro de passe est ensuite examiné dans une étape notée PASS, il s'agit alternativement soit d'une passe de droite à gauche, notée G, soit d'une passe de gauche à droite, notée D.

Dans le cas d'une passe G, la passe de recharge est accompagnée d'une passe de mesure, notée MES.$\varnothing_{N+1}$, qui fournit une succession de valeurs incrémentales du diamètre de la préforme d'une extrémité à l'autre. De ces valeurs est dérivée une valeur de diamètre moyen $\varnothing_{N+1}$, qui peut être la moyenne arithmétique des valeurs mesurées au long de la longueur utile de la préforme.

La longueur utile est celle qui, entre deux parties d'extrémités d'une dizaine de centimètres chacune, a des caractéristiques optogéométriques suffisamment homogènes pour fournir une fibre de la qualité désirée.

Dans le cas d'une passe D, il n'y a pas de passe de mesure. Les valeurs de diamètres de la préforme, néanmoins nécessaires, sont obtenues par extrapolation, à partir des valeurs de mesure collectées lors des passes G antérieures. Initialement, ces valeurs antérieures font défaut, mais c'est sans conséquence, comme on va le voir.

Après deux passes G, la passe D suivante donne lieu à une étape de calcul fournissant EP = $\frac{\varnothing_N - \varnothing_{N-2}}{2}$. La valeur $\varnothing_N$ est celle du diamètre moyen enregistrée lors de la passe précédente, qui était une passe G. La valeur $\varnothing_{N-2}$ est celle de la passe G précédant cette dernière. La différence $\varnothing_N - \varnothing_{N-2}$ est l'épaisseur moyenne déposée en deux passes. EP est donc l'épaisseur moyenne d'une passe durant les deux passes précédentes. Additionnée à $\varnothing_N$, elle fournit une extrapolation linéaire de ce que devrait être le diamètre le long de la préforme si l'on en faisait la mesure durant une passe D.

A l'étape suivante, une valeur $\Delta\varnothing = \varnothing_V - \varnothing_{N+1}$ est calculée. $\varnothing_V$ est le diamètre visé que doit nominalement avoir la préforme terminée. La différence $\Delta\varnothing$ est l'épaisseur qui reste à déposer. Elle est évaluée. Si $\Delta\varnothing \leq 0,2$ mm, le diamètre de la préforme est suffisamment proche du diamètre visé pour que le processus de recharge soit interrompu, ce qui est indiqué par l'étape dénommée GLA. Si $0,2$ mm $< \Delta\varnothing < $ EP, il manque moins que l'épaisseur moyenne d'une passe. L'étape AJUST sert alors à régler le débit du doseur de débit de grains à une valeur réduite telle qu'en une passe ou deux, à débit constant, l'on parvienne à $\Delta\varnothing \leq 0,2$ mm et à la fin du processus de recharge.

Si $\Delta\varnothing \geq $ EP, le processus de recharge peut se poursuivre par au moins une passe complète.

L'évaluation du diamètre de la préforme est alors effectuée.

Si $\Delta\varnothing - 8$ mm $> 0$, le processus de recharge n'a pas encore atteint le stade où il devient utile d'entreprendre la correction des défauts optogéométriques de la préforme. Le débit de grains KG est alors réglé à sa valeur nominale, KG = 1. La passe $P_{N+1}$ s'accomplit avec un débit constant égal à cette valeur nominale. Il en va ainsi depuis le début du processus de recharge et jusqu'à ce que $\Delta\varnothing - 8$ mm = 0. On voit donc qu'au début du processus, alors que ce stade n'est pas atteint, il n'importe pas que l'on ne puisse établir une valeur approximativement exacte du diamètre moyen de la préforme dans une passe D.

Lorsque $\Delta\varnothing - 8$ mm $\leq 0$, > le processus de recharge va être axialement modulé dans une passe de recharge au moins, mais le plus souvent plusieurs, en vue d'améliorer les propriétés optogéométriques de la préforme.

Dans l'exemple de la figure 2, cela est obtenu en ce que l'on applique d'abord une étape de calcul de l'écart de diamètre d$\varnothing_x$ à corriger, notée CALC d$\varnothing_x$.

Cette étape de calcul, accomplie dans le dispositif de commande 8 de la figure 1, consiste, dans un premier exemple, en une évaluation du diamètre le long de préforme, une détermination du diamètre minimal et un calcul, en chaque point le long de la préforme, de l'écart, c'est-à-dire de l'excès, du diamètre en ce point par rapport à ce diamètre minimal. L'ensemble de valeurs ainsi obtenues, appelées d$\varnothing_x$, x correspondant à une dimension axiale le long de la préforme, est utilisé pour moduler axialement l'un au moins des paramètres de la recharge plasma. Dans ce mode de réalisation, ce paramètre est le débit de grains KG, mais il est clair que l'on pourrait tout aussi bien jouer sur la vitesse de translation du chariot de support ou encore sur le débit des fluides de la torche à plasma ou d'autres paramètres encore.

Par ailleurs, dans un deuxième exemple de mise en oeuvre de l'invention, le mode de calcul de l'écart peut prendre la forme plus générale d'une évaluation d'écarts axiaux de diamètre effectué à partir d'un relevé des propriétés optogéométriques de la préforme obtenu en un stade quelconque du processus de recharge, par exemple avant le début de ce processus, et qui définit un profil de référence, la succession des diamètres que doit atteindre la préforme sur sa longueur utile, pour posséder des propriétés optogéométriques telles qu'après fibrage, la fibre optique obtenue ait les caractéristiques optogéométriques constantes désirées. Ces écarts seront utilisés pour moduler la recharge plasma comme dans l'exemple précédent.

Dans le mode de mise en oeuvre de la figure 2, la modulation de la recharge plasma dépend de la valeur de l'écart :

- si d$\varnothing$x á 0,7 mm, le débit de grains est réduit à KFx = 1 - 0,7 d$\varnothing$x; la correction peut avoir lieu en une seule passe;

- si d$\varnothing$x est compris entre 0,7 et 2 mm, la correction devra avoir lieu en plusieurs passes; pour ne pas introduire d'inhomogénéités trop marquées dans le processus de recharge, le débit de grains est réglé à 0,5 fois le débit nominal;

- si d$\varnothing$x est supérieur à 2 mm, il s'agit d'une des parties extrêmes de la préforme où l'épaisseur est initialement sensiblement plus élevée que le long de la partie utile de la préforme, et le débit de grain est interrompu; dans ces conditions, le plasma va évaporer à chaque passe une partie de la surépaisseur.

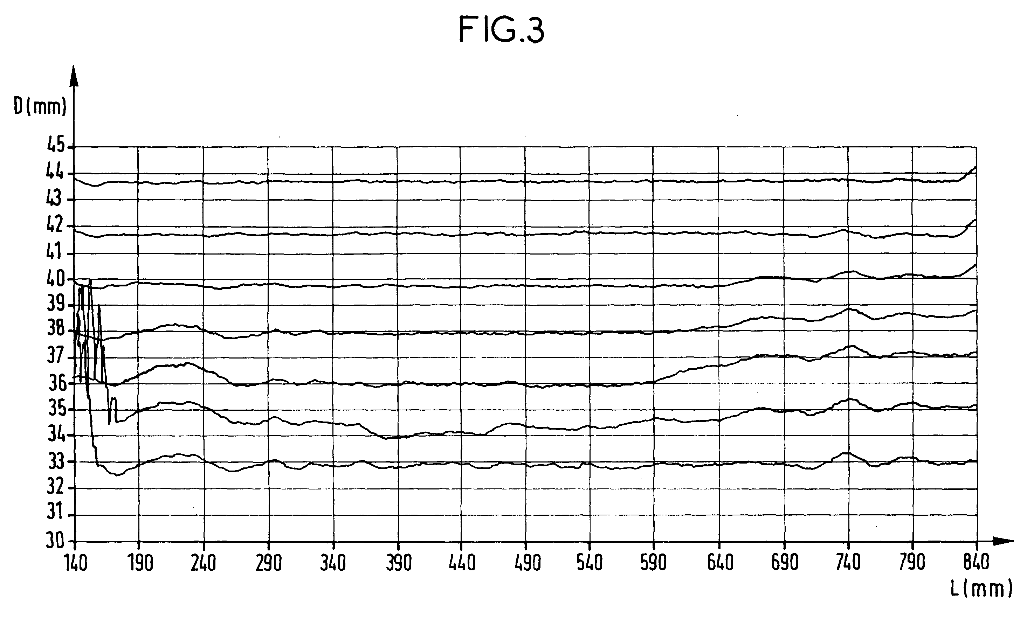

L'effet du procédé d'obtention de préforme de fibre optique que l'on vient d'exposer est illustré par les courbes de la figure 3 qui représentent chacune le diamètre (D) de la préforme sur sa longueur (L) utile, de 140 mm de l'origine à 840 mm.

La courbe du bas fait apparaître, alors que le diamètre mesuré a atteint 33-35 mm des irrégularités marquées, notamment à 200 mm et 740 mm environ. Le processus de correction des écarts est mis en oeuvre. Ensuite, l'effet de la modulation de la recharge réduit les inégalités de diamètres, durant les passes à 38, 40, 42 et 44 mm de diamètre environ, jusqu'à ce que, avant la dernière passe le diamètre soit devenu sensiblement constant tout au long de la partie utile de la préforme.

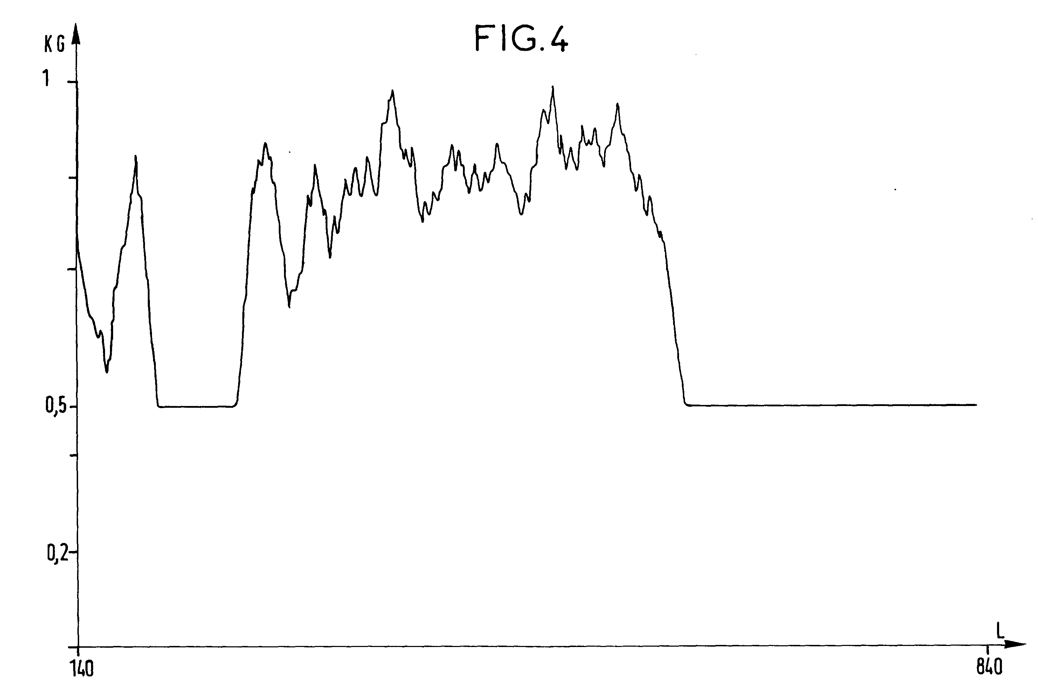

A titre illustratif, la figure 4 représente la consigne de débit de grains KG au cours de la passe à 36 mm environ de la figure 3. On y voit que le débit, qui atteint par moment 1, pour les rares points axiaux d'écart nul, est modulé proportionnellement à l'écart sur une grande partie de la longueur et tombe à 0,5 lorsque l'écart est trop grand.

Il est bien évident que les descriptions qui précèdent n'ont été fournies qu'à titre d'exemple non limitatif et que les valeurs numériques, notamment, peuvent varier selon la mise en oeuvre considérée.

## Revendications

1. Procédé d'obtention de préforme de fibre optique employant la recharge plasma caractérisé en ce qu'il comprend une passe de recharge modulée au moins au cours de laquelle le processus de recharge est axialement modulé en vue d'améliorer les propriétés optogéométriques de la préforme.

2. Procédé d'obtention de préforme pour fibre optique conforme à la revendication 1, caractérisé en ce que ladite passe de recharge modulée est l'une des dernières passes de recharge pour lesquelles le processus de recharge étant non modulé, l'épaisseur de la couche de recharge déposée serait sensiblement constante le long de la partie utile de la préforme.

3. Procédé d'obtention de préforme pour fibre optique conforme à la revendication 2, caractérisé en ce que ledit processus de recharge est modulé à partir d'un diamètre prédéterminé de la préforme, les passes de recharge étant toutes modulées à partir de ce diamètre.

4. Procédé d'obtention de préforme pour fibre optique conforme à la revendication 3, caractérisé en ce que ledit processus de recharge modulé consiste en une modification axiale contrôlée de l'un au moins des paramètres de la recharge plasma dont notamment le débit de grains de recharge, la température du plasma ou la vitesse de translation axiale du plasma, pour apporter une correction axiale contrôlée des caractéristiques optogéométriques de la préforme.

5. Procédé d'obtention de préforme pour fibre optique conforme à la revendication 4, caractérisé en ce que ledit paramètre modifié est le débit de grains.

6. Procédé d'obtention de préforme pour fibre optique conforme à la revendication 4, caractérisé en ce que ladite modification axiale contrôlée comprend une évaluation d'écarts axiaux de diamètre de la préforme et une modification axiale dudit paramètre dans un sens tel que ladite passe de recharge modulée réduise lesdits écarts axiaux de diamètre.

7. Procédé d'obtention de préforme pour fibre optique conforme aux revendications 5 et 6, caractérisé en ce que ladite modification de débit de grains est choisie, selon l'amplitude de ladite différence parmi :

   - une réduction de débit proportionnelle audit écart,
   - une réduction déterminée de débit,
   - un arrêt complet du débit de grains.

8. Procédé d'obtention de préforme pour fibre optique conforme à la revendication 6, caractérisé en ce que ladite évaluation s'effectue par mesure axiale de diamètre au cours d'une passe de mesure et détermination desdits écarts axiaux de diamètre par comparaison entre les résultats de ladite mesure axiale et un profil de référence.

9. Procédé d'obtention de préforme pour fibre optique conforme à la revendication 8, caractérisé en ce que ledit profil de référence comprend un diamètre axial minimal observé au cours de ladite passe de mesure.

10. Procédé d'obtention de préforme pour fibre optique conforme à l'une des revendications 8 ou 9, caractérisé en ce que ledit profil de référence comprend additionnellement un terme de correction axiale de diamètre dérivé de mesures effectuées sur la préforme antérieurement à la recharge plasma.

11. Procédé d'obtention de préforme pour fibre optique conforme à la revendication 8, caractérisé en ce que ladite passe de mesure coïncide avec une passe de recharge.

## Claims

1. A method of obtaining an optical fiber preform by employing plasma build-up, the method being characterized in that it includes at least one modulated build-up pass during which the build-up process is modulated axially in order to improve the opto-geometrical properties of the preform.

2. A method according to claim 1 for obtaining an optical fiber preform, characterized in that said modulated build-up pass is one of the last build-up passes for which passes, while the build-up process is not modulated, the thickness of the deposited build-up layer is substantially constant along the working portion of the preform.

3. A method according to claim 2 for obtaining an optical fiber preform, characterized in that said build-up process is modulated from a predetermined diameter of the preform, all of the build-up passes being modulated from said diameter.

4. A method according to claim 3 for obtaining an optical fiber preform, characterized in that said modulated build-up process consists in controlled axial modification of at least one of the plasma build-up parameters, in particular, the build-up grain flow rate, the plasma temperature, or the axial translation speed of the plasma, so as to provide controlled axial correction to the opto-geometrical characteristics of the preform.

5. A method according to claim 4 for obtaining an optical fiber preform, characterized in that said modified parameter is grain flow rate.

6. A method according to claim 4 for obtaining an optical fiber preform, characterized in that said controlled axial modification comprises evaluating axial errors in the diameter of the preform and in axially modifying said parameter in such a direction that said modulated build-up pass reduces said axial errors of diameter.

7. A method according to claim 6 for obtaining an optical fiber preform, characterized in that said modified parameter is grain flow rate and in that said grain flow rate modification is selected as a function of the amplitude of said difference selected from:

   a reduction in flow rate proportional to said error;
   a fixed reduction in flow rate; and
   total interruption of grain flow rate.

8. A method according to claim 6 for obtaining an optical fiber preform, characterized in that said evaluation takes place by axially measuring the diameter during a measurement pass and in determining said axial errors in diameter by comparison between the results of said axial measurement and a reference profile.

9. A method according to claim 8 for obtaining an optical fiber preform, characterized in that said reference profile has a minimum axial diameter observed during said measurement pass.

10. A method according to claim 8 or 9 for obtaining an optical fiber preform, characterized in that said reference profile also comprises an axial correction term for the diameter derived from measurements performed on the preform prior to plasma build-up.

11. A method according to claim 8 for obtaining an optical fiber preform, characterized in that said measurement pass coincides with a build-up pass.

**Patentansprüche**

1. Verfahren zur Herstellung einer Lichtleitfaservorform, das die Plasmaabscheidung verwendet, dadurch gekennzeichnet, dass es wenigstens einen modulierten Abscheidungsvorgang umfasst, während dessen der Abscheidungsvorgang im Hinblick auf eine Verbesserung der optogeometrischen Eigenschaften der Vorform axial moduliert wird.

2. Verfahren zur Herstellung einer Vorform für eine Lichtleitfaser nach Anspruch 1, dadurch gekennzeichnet, dass der modulierte Abscheidungsvorgang einer der letzten Abscheidungsvorgänge ist, für welche, wenn der Abscheidungsvorgang nicht moduliert wird, die Dicke der abgelagerten Abscheidungsschicht entlang des Nutzteils der Vorform im Wesentlichen konstant wäre.

3. Verfahren zur Herstellung einer Lichtleitfaservorform nach Anspruch 2, dadurch gekennzeichnet, dass der Abscheidungsvorgang ausgehend von einem vorbestimmten Durchmesser der Vorform moduliert wird, wobei die Abscheidungsdurchgänge ausgehend von diesem Durchmesser alle moduliert werden.

4. Verfahren zur Herstellung einer Vorform für eine Lichtleitfaser nach Anspruch 3, dadurch gekennzeichnet, dass der modulierte Abscheidungsvorgang in einer gesteuerten axialen Modifikation wenigstens eines der Parameter der Plasmaabscheidung, davon insbesondere der Ausstoß an Abscheidungskörnern, die Temperatur des Plasmas oder die axiale Translationsgeschwindigkeit, besteht, um eine gesteuerte axiale Korrektur der optogeometrischen Eigenschaften der Vorform vorzunehmen.

5. Verfahren zur Herstellung einer Vorform für eine Lichtleitfaser nach Anspruch 4, dadurch gekennzeichnet, dass der modifizierte Parameter der Kornausstoß ist.

6. Verfahren zur Herstellung einer Vorform für eine Lichtleitfaser nach Anspruch 4, dadurch gekennzeichnet, dass die gesteuerte axiale Modifikation eine Auswertung axialer Abweichungen des Durchmessers der Vorform und eine axiale Modifikation des Parameters in einer Richtung umfasst, so dass der modulierte Abscheidungsvorgang die axialen Abweichungen des Durchmessers verringert.

7. Verfahren zur Herstellung einer Vorform für eine Lichtleitfaser nach den Ansprüchen 5 und 6, dadurch gekennzeichnet, dass die Modifikation des Kornausstoßes entsprechend der Amplitude der Differenz ausgewählt wird aus:

   - einer zur Abweichung proportionalen Verringerung des Ausstoßes,
   - einer bestimmten Verringerung des Ausstoßes,
   - eines vollständigen Stopps des Kornausstoßes.

8. Verfahren zur Herstellung einer Vorform für eine Lichtleitfaser nach Anspruch 6, dadurch gekennzeichnet, dass die Auswertung durch axiale Messung des Durchmesser während eines Messdurchgangs und Bestimmung der axialen Abweichungen des Durchmessers durch Vergleich zwischen den Ergebnissen der axialen Messung und einem Bezugsprofil erfolgt.

9. Verfahren zur Herstellung einer Vorform für eine Lichtleitfaser nach Anspruch 8, dadurch gekennzeichnet, dass das Bezugsprofil einen während des Messdurchgangs beobachteten minimalen axialen Durchmesser umfasst.

10. Verfahren zur Herstellung einer Vorform für eine Lichtleitfaser nach einem der Ansprüche 8 oder 9, dadurch gekennzeichnet, dass das Bezugsprofil zusätzlich einen Term für die axiale Korrektur des Durchmessers umfasst, der aus an der Vorform vor der Plasmaabscheidung vorgenommenen Messungen hergeleitet wird.

11. Verfahren zur Herstellung einer Vorform für eine Lichtleitfaser nach Anspruch 8, dadurch gekennzeichnet, dass der Messdurchgang mit einem Abscheidungsdurchgang zusammenfällt.

# FIG.1

# FIG.2

INIT

DEP. $P_{N+1}$

PASS

$EP = \dfrac{\varnothing_N - \varnothing_{N-2}}{2}$ — D

$\varnothing_{N+1} = \varnothing_N + EP$

G

MES. $\varnothing_{N+1}$

$0,2\,mm < \Delta\varnothing < EP$ — $\Delta\varnothing = \varnothing_V \quad \varnothing_{N+1}$ — $\Delta\varnothing \leqslant 0,2\,mm$

AJUST

$\Delta\varnothing \geqslant EP$

GLA

$\Delta\varnothing - 8\,mm$ — $> 0$ — $KG_X = 1$

$\leqslant 0$

CALC $d\varnothing_X$

$0,7\,mm \geqslant d\varnothing_X \geqslant 2\,mm$

$d\varnothing_X$ — $KG_X = 0,5$

$d\varnothing_X < 0,7\,mm$ — $KG_X = 1 - 0,7\,d\varnothing_X$

$d\varnothing_X > 2$ — $KG_X = 0$

# FIG.3

EP 0 719 738 B1

FIG.4

EP 0 719 738 B1